# FASCICULE DE BREVET EUROPEEN

(11) **EP 1 944 723 B1**
(45) Date de publication et mention de la délivrance du brevet: **15.07.2009**
(21) Numéro de dépôt: 07124103.8
(22) Date de dépôt: 27.12.2007
(51) Int. Cl.: G06K 19/073, G06F 21/00

(54) **Module de sécurité matériel procédé de mise en service et terminal de paiement électronique utilisant ce module**
Hardware-Sicherheitsmodul, Inbetriebnahme und Endgerät zur elektronischen Bezahlung, in dem dieses Modul verwendet wird.
Hardware security module, implementation method and electronic payment terminal using this module

(30) Priorité: 02.01.2007 FR 0700002
(43) Date de publication de la demande: 16.07.2008
(73) Titulaire: Compagnie Industrielle et Financiere d'Ingenierie Ingenico, 92200 Neuilly sur Seine (FR)
(72) Inventeur: Naccache, David, 75018, PARIS (FR)
(74) Mandataire: Bioret, Ludovic

(56) Documents cités:
- FR-A- 2 823 887
- FR-A- 2 880 973
- FR-A1- 2 627 875
- FR-A1- 2 831 327

## Description

La présente invention concerne un module de sécurité matériel, ainsi qu'un procédé de mise en service de ce module et un terminal de paiement électronique équipé d'un tel module.

On connaît diverses technologies de modules de sécurité matériel (ou composants matériel de sécurité), aussi appelés HSMs (de l'anglais "Hardware Security Module").

Un module de sécurité est par exemple une carte PCI (par exemple la carte PCI IBM 4758) ou un dispositif externe SCSI / IP. Son rôle est de stocker de manière fiable des secrets, à long terme, pour un usage cryptographique et de protéger (en général physiquement) l'accès à et l'utilisation de ces secrets dans le temps. Un module de sécurité peut également être capable de générer ce secret. Généralement, les secrets sont des clefs privées, utilisées en cryptographie. Certains modules de sécurité permettent également la protection matérielle de clefs symétriques.

Un module de sécurité peut être apte à être couplé à un système hôte hébergé par une machine informatique. Ce module peut par exemple être scellé au corps d'une machine et comporter des éléments indispensables à son fonctionnement de sorte qu'on ne puisse pas retirer ce module ou le mettre hors service sans entraver l'utilisation de la machine.

Ces modules sont généralement conformes à la norme FIPS ("Federal Information Protection Standards") 140 (par exemple PUB 140-1 Level 3 ou supérieure), qui établit des exigences de sécurité. Par exemple, la norme FIPS 3 requiert qu'un module de sécurité soit inviolable, à la fois au sens des terminologies anglais "tamper-evident" et "tamper-resistant". L'inviolabilité " (au sens de "tamper-evident" est habituellement obtenue par l'utilisation d'une bague ou d'un joint inviolable. L'inviolabilité ("Tamper-resistance") est habituellement obtenue par revêtement des puces ou des cartes dans une résine plastique non-conductrice.

De tels modules de sécurité connaissent des problèmes divers. Un premier problème est que la technologie de "résine" implique des contraintes sur la forme du circuit composant le module, qui doit être carrée. Un autre problème est lié à la dissipation thermique et aux contraintes exercées par la résine sur le circuit : la résine ne s'étire pas comme le support sous l'effet de la température. Ceci conduit parfois à un taux de casse non négligeable lors de la production ou de l'assemblage (le taux peut atteindre 15%). Le module de sécurité n'est alors pas réutilisable.

Il existe donc un besoin pour un module de sécurité garantissant une inviolabilité, et résolvant l'un au moins de problèmes ci-dessus, causés par l'utilisation de résine. En particulier, ce module doit être de conception telle qu'il n'entraîne pas de contraintes quant à la forme du circuit. Idéalement, ce module devrait être au moins partiellement recyclable, plus résistant à la pénétration physique et moins cher qu'un module résine classique.

Par exemple, le document de brevet FR 2 831 327 présente une technique de protection de l'environnement ambiant pour un composant comportant une source d'énergie. Le principe décrit dans ce document porte sur l'utilisation d'une cavité étanche dans laquelle sont disposées les parties à protéger du composant, et notamment la source d'énergie. Selon un mode de réalisation décrit dans ce document, cette cavité est remplie d'un gaz inerte et peut comprendre un capteur de pression de façon à rendre inutilisable le composant si une variation de pression est détectée dans la cavité. Cependant, dans ce cas, le composant est rendu inutilisable.

L'invention a ainsi pour objet un module de sécurité matériel comprenant une mémoire susceptible de stocker un secret, un processeur couplé à la mémoire, dans lequel : le module de sécurité matériel comprend en outre : une enceinte étanche comprenant un gaz, un transducteur couplé au processeur, sensible à une propriété du gaz, apte à convertir cette propriété en un signal et fournir ce signal au processeur, dans lequel le processeur est apte à générer ou accueillir un secret en cas de réception d'un premier signal, fourni par le transducteur, correspondant à une première variation substantielle de ladite propriété du gaz et apte à agir sur le secret en cas de réception d'un second signal, fourni par le transducteur, correspondant à une deuxième variation substantielle de ladite propriété du gaz.

Dans des modes de réalisation préférés, le module selon l'invention comprend une ou plusieurs des caractéristiques suivantes:
- le module comprend en outre un agent chimique dans l'enceinte, susceptible de libérer une quantité de gaz par ignition ;
- le transducteur est un capteur sensible à la pression du gaz ;
- le processeur étant en outre apte à : générer ou accueillir un secret en cas de réception d'un signal correspondant à une première variation substantielle de pression; et agir sur le secret en cas de réception d'un signal correspondant à une deuxième variation substantielle de pression, le cas échéant de signe opposé à la première variation ;
- le module comprend en outre un capteur sensible à la température du gaz ; et
- le module comprend : une première partie comprenant l'enceinte, le transducteur, et la mémoire ; et une deuxième partie, l'une de ces parties étant enfichable sur l'autre de ces parties.

L'invention concerne également un terminal de paiement électronique, comprenant un module de sécurité matériel selon l'invention.

L'invention concerne en outre un procédé de mise en service d'un module de sécurité matériel selon l'invention comprenant l'étape de fourniture du module de sécurité matériel et d'établissement de la propriété du gaz dans l'enceinte.

Dans des modes de réalisation préférés, le procédé selon l'invention comprend une ou plusieurs des caractéristiques suivantes:
- le procédé comprend en outre une étape de chargement du secret dans la mémoire du module de sécurité matériel ; et
- le procédé comprend les étapes : de fourniture d'un lot de modules de sécurité matériel selon l'invention ; et de modification aléatoire dans un intervalle donné de la propriété d'un gaz dans les enceintes de modules du lot.
Préférentiellement, l'intervalle donné est éloigné de la valeur seuil.

Cette modification aléatoire empêche un tiers malintentionné de tenter d'accéder frauduleusement à l'intérieur du module en le plaçant dans une enceinte dont la pression serait choisie égale à celle de l'enceinte, de façon à éviter la détection de l'ouverture. En effet, ce tiers ne peut pas connaître la pression réelle à l'intérieur de l'enceinte, celle-ci étant aléatoire. Dans ce cas, les transducteurs, ou capteurs, peuvent tenir compte d'une mesure de pression, et/ou d'une mesure de variation de pression.

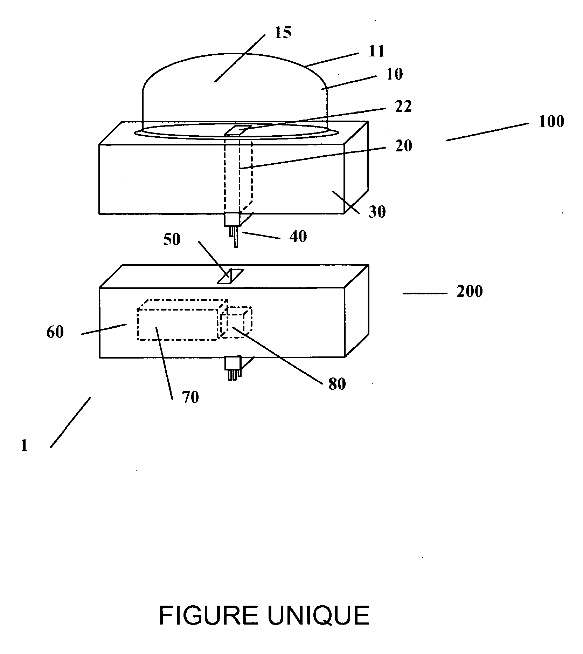

D'autres caractéristiques et avantages de l'invention apparaîtront à la lecture de la description détaillée qui suit des modes de réalisation de l'invention, donnés à titre d'exemple uniquement, et en référence à la figure unique qui montre un module de sécurité selon un mode de réalisation de l'invention.

L'invention propose un module de sécurité matériel comprenant une mémoire susceptible de stocker un secret et un processeur couplé à la mémoire. Ce module comprend en outre une enceinte étanche comprenant un gaz et un transducteur couplé au processeur. Ce transducteur est sensible à une propriété du gaz, par exemple la pression ; il est apte à convertir cette propriété en un signal fourni au processeur. Le processeur est conçu pour agir sur le secret (par exemple l'effacer) si le signal reçu indique une violation physique de l'enceinte.

Ce module est conçu de telle sorte qu'une variation d'une propriété du gaz se produise en cas de violation physique du module. Une violation du module se traduit par exemple par une violation de l'enceinte (fracture, etc.), ce qui entraîne notamment un changement de pression. La variation subséquente de propriété du gaz engendre alors un signal correspondant, lequel est interprété par le processeur qui agît ensuite sur le secret. Par exemple, cette variation de propriété conduit au dépassement (dans un sens ou dans l'autre) d'une valeur seuil, prédéfinie en conséquence. Plus spécifiquement, cette valeur seuil peut être définie de telle sorte qu'une violation physique entraîne de manière certaine le dépassement de la valeur seuil. En variante, c'est une variation de pression dans le temps qui est interprétée par le processeur. En tout état de cause, le processeur est apte à agir sur le secret en cas de réception d'un signal, fourni par le transducteur, correspondant à un changement substantiel de la propriété du gaz.

Un tel module permet donc d'assurer une inviolabilité au sens de la terminologie anglaise "Tamper-resistance", sans pour autant nécessiter de revêtement en résine plastique non-conductrice. Sa conception n'implique aucune contrainte particulière quant à la forme du circuit (comprenant le processeur, la mémoire, etc). Ainsi, des inconvénients liés à l'utilisation de résine sont-ils évités.

Par transducteur, on entend un dispositif qui sert à transformer, suivant par exemple une loi déterminée, une grandeur physique en une autre grandeur physique ou en une autre valeur de la même grandeur, avec une précision donnée. Le transducteur en question peut par exemple être un capteur de pression ; il peut également s'agir de tout autre dispositif permettant de caractériser une violation de l'enceinte.

La figure unique montre un module de sécurité selon un mode de réalisation de l'invention.

Plus en détails, cette figure montre un module de sécurité matériel 1 équipé d'une mémoire 80 susceptible de contenir un secret. Un processeur 70 est couplé à la mémoire 80. Le processeur et la mémoire peuvent être du même type que ceux équipant les modules de sécurité connus. La mémoire 80 peut par exemple être une mémoire RAM entretenue par une batterie. Comme dans les dispositifs connus, le rôle du processeur 70 et de la mémoire 80 est de stocker de manière fiable ce secret, à long terme, pour un usage cryptographique. Le processeur peut également être capable de générer ce secret, comme il sera décrit plus loin. Le secret en question peut par exemple être une clef privée.

Selon l'invention, le module de sécurité représenté comprend en outre une enceinte 10 étanche, dans laquelle est contenue un gaz 15. En pratique, cette enceinte peut être formée par une enveloppe 11 (ou un tube), solidaire d'un support 30. La conception et la fabrication de l'enveloppe 11 peuvent être basées sur celles des enveloppes de tubes à vide. L'enveloppe peut être en verre (pour l'obtention d'un vide relatif dans l'enceinte), mais le métal, le quartz fondu (silice) et la céramique sont d'autres choix possibles. L'épaisseur de l'enveloppe variera en fonction de limites de résistance (mécaniques, en température, etc.) recherchées pour l'enveloppe. De préférence également, l'enveloppe est opaque, afin de prévenir toute interaction avec un laser ou une autre source de rayonnement.

En général, en cas de violation de l'enceinte, une propriété (au moins) du gaz va changer. Par exemple, en cas de fracture de l'enceinte, la pression de gaz dans l'enceinte change. Typiquement, l'enceinte est chargée avec un gaz inerte, sous une pression différente de la pression atmosphérique. Ainsi, en cas de violation (par exemple en cas de fracture), ce sont à la fois la nature et la pression du gaz qui changent.

Le module de sécurité selon l'invention comprend également un transducteur 20, 22, couplé au processeur 70. Ce transducteur est sensible à une propriété du gaz 15. Il est, à cet égard, disposé de manière idoine dans l'enceinte : par exemple, la partie 22 du transducteur qui est sensible à la propriété en question est directement exposée au gaz 15. Dans l'exemple de la figure, la partie 22 affleure à la surface du support 30 sur lequel est fixée l'enveloppe 11 fermant l'enceinte 10.

Typiquement, le transducteur est un capteur sensible à la pression du gaz 15 dans l'enceinte 10. Le capteur en question comprend un organe 22 mécanique qui se déforme sous l'action de la pression du gaz 15 à mesurer. Le capteur 20, 22 produit un signal électrique, typiquement proportionnel à la pression ressentie, ce signal étant destiné à alimenter (indirectement) le processeur 70. D'autres types de transducteur peuvent cependant être envisagés, par exemple un capteur de température. La combinaison de plusieurs types de capteurs peut en outre être envisagée, comme il sera décrit plus loin.

Qu'il s'agisse de la pression ou d'une autre propriété du gaz, le transducteur 20, 22 est apte à convertir cette propriété en un signal, selon le principe du transducteur, et à fournir ce signal au processeur 70. Le signal peut être transmis périodiquement ou en suite à une variation de la valeur mesurée. Cela dépend de la nature du transducteur utilisé.

Le processeur 70, couplé au transducteur est apte à interpréter le signal, ce qui équivaut à lui faire correspondre une valeur donnée ou une plage de valeurs donnée. A cet effet, le processeur peut comparer la valeur véhiculée par le signal à une valeur de référence, stockée dans une mémoire, par exemple dans la mémoire 70. Le cas échéant, une tolérance peut être prévue, pour compenser par exemple des fluctuations de pression (due à un défaut d'étanchéité, le cas échéant). Des opérations plus avancées peuvent cependant être impliquées, telles que la comparaison à une courbe de référence. Ceci sera décrit plus loin.

En fonction du résultat de cette interprétation, le processeur peut alors prendre une mesure appropriée en vue de protéger le secret. En particulier, le processeur 70 est apte à agir sur le secret contenu dans la mémoire, en cas de réception d'un signal correspondant à une variation substantielle de la propriété du gaz. Ceci est par exemple le cas lorsqu'une valeur de propriété du gaz dépasse une valeur seuil prédéfinie. Le processeur peut alors par exemple directement effacer ou au moins affecter le secret de sorte qu'il ne puisse pas être violé.

Selon un mode de réalisation décrit maintenant, l'action du processeur sur le secret comporte deux phases. La première de ces phases correspond à une phase de mise en service, tandis que le deuxième correspond à une phase de fonctionnement, visant à préserver le secret.

Plus en détail, lors de la première phase (mise en service), on établit une certaine propriété au gaz 15 contenu dans l'enceinte.

Cette opération peut par exemple consister à charger mécaniquement un gaz inerte dans l'enceinte. En variante, on peut prévoir des moyens chimiques, déposés dans l'enceinte, chargés de faire évoluer les propriétés du gaz dans l'enceinte. Ces moyens peuvent par exemple être de la neige carboniques devant se sublimer sous pression atmosphérique à l'état gazeux ou des molécules piégeant un gaz initialement chargé dans l'enceinte. Il peut s'agir aussi de poudre pyrotechnique; ceci sera développé plus tard.

Une propriété du gaz - par exemple la pression - est ainsi amenée à une première valeur. Le cas échéant, cette première valeur se situe au-delà d'une première valeur seuil connue ou accessible par le processeur 70. Sur réception d'un signal correspondant à une variation substantielle de la propriété du gaz, le processeur génère le secret, lequel est ensuite stocké dans la mémoire 80.

En variante, le processeur ne génère pas lui-même le secret mais se met en attente de la réception du secret, qui est alors chargé dans la mémoire au moyen d'un dispositif externe au module de sécurité, d'une manière connue en soi.

Dans un second temps, le processeur 70 est apte à agir sur le secret en cas de réception d'un signal correspondant à une deuxième variation, par exemple correspondant à une valeur de ladite propriété dépassant une deuxième valeur seuil. Les variations ou dépassements de "valeur seuil" lors de la première et de la deuxième phases peuvent être effectués dans un même sens ou des sens opposés (c'est-à-dire dans un premier sens puis dans l'autre, selon le cas de figure).

Le cas échéant, le processeur 70 n'agit sur le secret en cas de dépassement de la deuxième valeur seuil que si la première valeur seuil a déjà été franchie.

A titre d'exemple, lors de la mise en service, on peut charger l'enveloppe 11 d'un gaz inerte sous une pression supérieure à la pression atmosphérique *P0.* Lorsque la pression courante *P* établie dans l'enceinte 11 dépasse une première valeur seuil *P1* (c'est-à-dire qu'elle passe au dessus de P1, soit *P* > *P1,* avec par exemple *P1* = 2 *P0*)*,* le processeur 70 génère le secret ou se met en attente de réception du secret. Lors de la phase utilisation, dans l'éventualité où le module serait physiquement violé, l'enveloppe 11 est brisée, et la pression courante *P* chute à *P0.* En chutant, la pression courante dépasse la deuxième valeur seuil *P2* (*P0* < *P2* ≤ *P1*), c'est-à-dire qu'elle passe cette fois en dessous de la deuxième valeur seuil P2. Sur réception du signal correspondant, le processeur 70 agît sur le secret comme expliqué ci-dessus.

En fait, le processeur 70 n'agit sur le secret lorsque la pression passe en dessous de *P2* que parce que la pression a déjà franchie *P1* une première fois. A cet égard, le signe de la variation peut être utilisé par le processeur afin de décider de l'action à mener. *P2* peut être égale à *P1*, ce qui nécessite de ne stocker qu'une valeur de référence (plus une tolérance, le cas échéant). Dans ce cas, le processeur teste si la valeur seuil a été dépassée deux fois de suite, en sens inverses. Cependant, il est préférable de choisir une valeur de pression *P2 < P1*, afin de conserver une maîtrise de l'état du secret lors de la fabrication (pour une pression donnée, on sait de manière sûre si le processeur a effacé le secret ou non). De même, on choisit de préférence une valeur de *P2* différente de *P0,* afin de conserver la maîtrise de l'état du secret lors de manipulations à pression ambiante.

Selon une variante, l'enceinte 10 est amenée à une pression inférieure à la pression atmosphérique *P0* (dépression) lors de la mise en service. L'état de dépression peut être obtenu de façon similaire à un procédé de fabrication d'un tube électronique ou de façon chimique. Lorsque la pression courante *P* passe au dessous de *P1 (P < P1*), avec par exemple *P1 = P0*/*4*), le processeur génère le secret ou se met en attente de secret. Ensuite, en cas de violation, la pression courante *P* remonte à *P0.* En remontant, la pression courante dépasse une deuxième valeur seuil *P2* (*P1 < P2 < P0*), c'est-à-dire qu'elle passe cette fois au dessus de la deuxième valeur seuil *P2* (par exemple *P1* = *3P0*/*8*)*.*

Comme illustré plus haut, on choisit de préférences des valeurs distinctes pour *P2* et *P1.* Au vu des explications fournies ci-dessus, l'homme du métier réalisera qu'il est cependant possible implémenter l'invention pour une seule et même valeur de *P2 = P1.*

Il peut en outre être avantageux de prévoir une tolérance lorsqu'il est testé si *P < P1, P < P2, P > P1* ou *P > P2,* afin de prévenir toute action inopportune du processeur. La tolérance en question est ajustée en fonction des conditions d'utilisation estimée. Par exemple, si ces conditions impliquent une température locale donnée, il convient de prévoir un changement de pression associé et de répercuter ce changement dans la tolérance.

Le processeur peut être prévu pour fonctionner sur un seul cycle, pour certaines applications. Par exemple, s'il détecte que les valeurs *P1* puis *P2* ont toutes deux déjà été dépassées une fois, il n'est plus apte à générer ou se mettre en attente d'un secret. Pour d'autres applications et notamment en vue de son recyclage, il peut être apte à fonctionner sur plusieurs cycles. Par exemple, après un premier cycle, s'il détecte que la valeur *P1* est dépassée, le processeur 70 est de nouveau apte à générer ou se mettre en attente d'un secret.

Par ailleurs, le module 1 comprend de préférence deux parties 100, 200, comme illustré sur la figure. Une première partie 100 comprend l'enceinte 10, le transducteur 20, 22, ainsi que la mémoire 80 gardant le secret, tandis que la deuxième partie 200 est constituée d'autres composantes du module de sécurité. L'une de ces parties, par exemple la première partie 100 est enfichable sur l'autre partie 200. Un connecteur à broches standard peut par exemple être utilisé.

De la sorte, en cas de casse ou de dysfonctionnement de l'enceinte ou du transducteur, seule la première partie 100 est perdue. Les autres composants du module (par exemple le processeur) contenus dans la deuxième partie peuvent être directement recyclés en les enfichant dans une nouvelle enceinte. Le module est alors partiellement recyclable, ce qui est un avantage considérable par rapport aux HSMs résinés.

De préférence, le module 1 comprend un capteur sensible à la température du gaz 15, outre le transducteur 20, 22. La combinaison de capteurs recherchée est par exemple un couple de capteurs de pression et température. Ceci permet d'affecter le module 1 à des conditions d'utilisations variées, en ce qui concerne la température. La comparaison à des valeurs seuils peut alors prendre la forme d'une comparaison à des couples de valeurs pression / température (ci-après *P, T).* Il peut cependant s'avérer plus avantageux de comparer le couple de valeurs *P*, *T* courantes à une courbe pression / température du gaz 15, par exemple modélisée sous la forme d'une fonction simple, connue du processeur 70. Lorsque les couples *P, T* s'écartent substantiellement de la courbe, alors le processeur 70 agît sur le secret comme décrit plus haut.

Selon un autre mode de réalisation, le module 1 est pourvu d'une capsule comprenant un composé chimique, par exemple de la poudre à canon ou un équivalent, par exemple un matériau pyrotechnique, et des moyens d'ignition de ce matériau. Lors de la mise en service du module, celui-ci est connecté en usine à un circuit électrique qui génère une étincelle via les moyens d'ignition. Les moyens d'ignitions sont par exemple un circuit relayant une décharge, terminé par une électrode susceptible de produire une étincelle. La libération de gaz qui s'ensuit provoque une élévation substantielle de la pression, par exemple à une valeur *P1.* La pression alors établie est mémorisée dans une mémoire, par exemple la mémoire 70. Si ensuite, lors de la phase utilisation, il est détecté une chute de pression, le processeur agît sur le secret comme exposé plus haut. Le coût de revient escompté d'un tel module est actuellement de l'ordre de US $ 0.8.

Selon une variante, le module est assemblé en usine dans un environnement pressurisé où règne une pression *P1* (*P1 > P0*); c'est cette pression qui est dès lors établie dans l'enceinte 10. Si ensuite, lors de la phase utilisation, il est détecté une chute de pression, le processeur agît sur le secret.

En outre, pour sécuriser encore davantage les modules de sécurité 1 et pour se prémunir de toute violation, le procédé de mise en service peut être modifié de sorte à charger initialement des enceintes de modules selon des pressions aléatoires. Les pressions sont préférablement confinées dans un intervalle suffisamment éloigné de la ou les valeurs seuils, afin d'éviter toute action malencontreuse du processeur. Ainsi, il n'est pas possible de prévoir l'évolution de la pression dans une enceinte, lorsque l'on applique une température donnée. Un fraudeur ne peut donc pas contourner le système en plaçant le module dans des conditions prédéfinies de pression et/ou de température, de façon à pouvoir l'ouvrir sans que le premier et/ou le deuxième signal soit généré.

Dans cette situation notamment, la génération des premier et deuxième signaux peut ne pas tenir compte d'un seuil prédéterminé, mais d'une variation de pression et/ou de température.

Comme évoqué plus haut, le module de sécurité 1 peut être apte à être couplé à un système hôte hébergé par une machine informatique. A cet égard, le module de sécurité peut comprendre un module entrée / sortie, couplé au processeur, responsable des échanges des données entre le système hôte et le circuit via un bus PCI. Le processeur est typiquement pourvu de fonctionnalités assurant des opérations de chiffrement et de déchiffrement ainsi que le stockage d'information dans la mémoire. Le module de sécurité peut en outre être pourvu de divers moyens pour interdire au système hôte l'accès à certaines informations (en particulier les secrets) stockées dans la mémoire. Dans un mode de réalisation, le processeur, le module entrée / sortie et les moyens d'interdiction d'accès sont arrangés dans la deuxième partie 200 visible sur la figure, en vue d'un recyclage éventuel.

A cet égard, l'invention concerne également un terminal de paiement électronique, équipé du module de sécurité 1 tel que décrit ci-dessus.

Un terminal de paiement électronique (TPE) est généralement connu de l'art : c'est un appareil électronique permettant d'enregistrer une transaction de paiement sécurisée. Un TPE est typiquement un ordinateur placé chez un commerçant, qui permet des règlements par cartes bancaires (telles que les cartes à puce ou les cartes à piste magnétique). Le commerçant introduit la carte de son client dans le lecteur du terminal et entre le montant de la transaction. Le client valide son achat, par exemple en composant son code confidentiel sur le clavier de l'appareil et reçoit un ticket confirmant la transaction.

Le module de sécurité 1 inviolable offre les fonctions cryptographiques nécessaires à la sécurisation des transactions via le TPE selon l'invention. Il peut par exemple prendre en charge des systèmes de terminaux de paiement variés, utilisés dans le monde entier. Le module de sécurité peut par exemple intégrer divers schémas de gestion de clés requis pour sécuriser les terminaux, comme par exemple le schéma « Racal Transaction Key », les versions Single et Triple DES des schémas DUKPT (pour "Derived Unique Key Per Transaction") et « Australian Transaction Key ».

L'invention n'est cependant pas limitée aux variantes décrites ci avant mais est susceptible de nombreuses autres variations aisément accessibles à l'homme du métier. Par exemple, le transducteur peut être un capteur chimique (tel qu'un capteur de composition gazeuse). De tels capteurs sont connus de l'art par exemple. Un tel capteur peut par exemple être constitué d'une partie chimiosélective (c'est-à-dire permettant la reconnaissance de l'espèce chimique) et d'un détecteur qui traduit l'interaction chimique en signal électrique. Plutôt que de baser l'action du processeur sur la détection d'une différence de pression, l'action est alors basée sur la détection d'un changement de la composition chimique du gaz 15 dans l'enceinte.

A titre d'exemple encore, plutôt que d'effacer le secret, le processeur peut fournir un signal d'alerte ou chiffrer le secret à l'aide d'une clé publique connue du seul propriétaire légitime du dispositif Un délai de temporisation peut en outre être prévu avant l'effacement du secret.

## Revendications

1. Module de sécurité matériel (1) comprenant :
- une mémoire (80) susceptible de stocker un secret ;
- un processeur (70) couplé à la mémoire (80) ;
- une enceinte (10) étanche comprenant un gaz (15) ;
- un transducteur (20, 22) couplé au processeur (70), sensible à une propriété du gaz (15), apte à convertir cette propriété en un signal et fournir ce signal au processeur (70) ;
**caractérisé en ce que** le processeur (70) est adapté pour:
- générer ou accueillir un secret en cas de réception d'un premier signal fourni par le transducteur (20, 22), correspondant à une première variation substantielle de ladite propriété du gaz (15) ; et
- agir sur le secret en cas de réception d'un second signal fourni par le transducteur (20, 22), correspondant à une deuxième variation substantielle de ladite propriété du gaz (15).

2. Module de sécurité matériel (1) selon la revendication 1, **caractérisé en ce que** :
- le module comprend en outre un agent chimique dans l'enceinte (10), susceptible de libérer une quantité de gaz (15) par ignition.

3. Module de sécurité matériel (1) selon la revendication 1 et 2, **caractérisé en ce que:**
- le transducteur (20, 22) est un capteur sensible à la pression du gaz (15).

4. Module de sécurité matériel (1) selon la revendication 3, **caractérisé en ce que :**
- la deuxième variation substantielle de pression est de signe opposé à la première variation.

5. Module de sécurité matériel (1) selon l'une quelconque des revendications 1 à 4, **caractérisé en ce qu'il** comprend en outre un capteur sensible à la température du gaz (15).

6. Module de sécurité matériel (1) selon l'une quelconque des revendications 1 à 5, **caractérisé en ce que** le module comprend:
- une première partie (100) comprenant l'enceinte (10), le transducteur (20, 22), et la mémoire (80) ; et
- une deuxième partie (200),
l'une de ces parties étant enfichable sur l'autre de ces parties.

7. Terminal de paiement électronique, comprenant un module de sécurité matériel
(1) selon l'une quelconque des revendications 1 à 6.

8. Procédé de mise en service d'un module de sécurité matériel (1) selon l'une quelconque des revendications 1 à 7 comprenant les étapes suivantes :
- fourniture du module de sécurité matériel (1) ;
- établissement de la propriété du gaz (15) dans l'enceinte ;
- chargement du secret dans la mémoire (80) du module de sécurité matériel en cas de réception d'un premier signal correspondant à une première variation substantielle de ladite propriété du gaz (15);
- action sur ledit secret en cas de réception d'un second signal correspondant à une deuxième variation substantielle de ladite propriété du gaz (15).

9. Procédé de mise en service d'un lot de modules de sécurité matériel (1), comprenant les étapes suivantes :
- fourniture d'un lot de modules de sécurité matériel (1) selon la revendication 1 à 7 ; et
- modification aléatoire dans un intervalle donné de la propriété d'un gaz (15) dans les enceintes de modules du lot ;
- chargement de secrets dans les mémoires (80) des modules de sécurité du lot en cas de réception d'un premier signal correspondant à une première variation substantielle de ladite propriété du gaz (15);
- action sur lesdits secrets en cas de réception d'un second signal correspondant à une deuxième variation substantielle de ladite propriété du gaz (15).

## Claims

1. Hardware security module comprising:
- a memory able to store a secret;
- a processor coupled to the memory;
- a sealed chamber comprising a gas;
- a transducer coupled to the processor, sensitive to a property of the gas, able to convert this property into a signal and to supply this signal to the processor; wherein:
- the processor is designed for generating or accepting a secret in the event of the reception of a first signal, supplied by the transducer, corresponding to a first substantial variation in said property of the gas;
- the processor is designed for acting on the secret in the event of the reception of a second signal, supplied by the transducer, corresponding to a second substantial variation in said property of the gas.

2. Hardware security module according to claim 1, wherein:
- the module also comprises a chemical agent in the chamber, able to release a quantity of gas by ignition.

3. Hardware security module according to claim 1 or 2, wherein:
- the transducer is a sensor sensitive to pressure of the gas.

4. Hardware security module according to claim 3, wherein the second substantial variation in pressure is of opposite sign to the first variation.

5. Hardware security module according to any one of claims 1 to 4, wherein the module also comprises a sensor sensitive to the temperature of the gas.

6. Hardware security module according to any one of claims 1 to 5, wherein the module comprises:
- a first part comprising the chamber, the transducer, and the memory; and
- a second part, in which one of these parts can be plugged onto the other of these parts.

7. Electronic payment terminal comprising a hardware security module according to any one of claims 1 to 6.

8. Method of commissioning a hardware security module according to any one of claims 1 to 6, comprising:
- supplying the hardware security module,
- establishing the property of the gas in the chamber,
- loading the secret into the memory of the hardware security module, in the event of reception of a first signal corresponding to a first substantial variation in said property of the gas,
- acting on the secret in the event of the reception of a second signal corresponding to a second substantial variation in said property of the gas.

9. Method of commissioning a batch of hardware security modules, comprising:
- supplying the batch of hardware security modules according to any one of claims 1 to 7, and
- randomly modifying in a given range the property of a gas in the chambers of modules in the batch,
- loading secrets into memories of the security modules in the batch, in the event of the reception of a first signal corresponding to a first substantial variation in said property of the gas,
- acting on secrets in the event of the reception of a second signal corresponding to a second substantial variation in said property of the gas.

## Patentansprüche

1. Hardwaresicherheitsmodul (1), umfassend:
- einen Speicher (80), der ein Geheimnis speichern kann;
- einen Prozessor (70), der mit dem Speicher gekoppelt ist (80);
- ein dichtes Gehäuse (10) bzw. einen gasdichten Raum, das bzw. der ein Gas (15) enthält;
- einen Wandler (20, 22), der mit dem Prozessor (70) gekoppelt ist und empfindlich auf eine Eigenschaft des Gases (15) reagiert und in der Lage ist, diese Eigenschaft in ein Signal umzusetzen und dieses Signal an den Prozessor (70) zu übermitteln;
**dadurch gekennzeichnet, dass** der Prozessor (70) geeignet ist:
- beim Empfangen eines ersten, vom Wandler (20, 22) übermittelten Signals, das einer ersten wesentlichen Änderung dieser Eigenschaft des Gases (15) entspricht, ein Geheimnis zu erzeugen oder zu empfangen, und
- beim Empfangen eines zweiten, vom Wandler (20, 22) übermittelten Signals, das einer zweiten wesentlichen Änderung dieser Eigenschaft des Gases (15) entspricht, auf das Geheimnis einzuwirken.

2. Hardwaresicherheitsmodul (1) nach Anspruch 1, **dadurch gekennzeichnet, dass:**
- das Modul weiterhin in dem Gehäuse (10) einen chemischen Stoff enthält, der durch Zündung eine Menge Gas (15) freisetzen kann.

3. Hardwaresicherheitsmodul (1) nach Anspruch 1 und 2, **dadurch gekennzeichnet, dass:**
- der Wandler (20, 22) ein Sensor ist, der empfindlich auf den Druck des Gases (15) reagiert.

4. Hardwaresicherheitsmodul (1) nach Anspruch 3, **dadurch gekennzeichnet, dass:**
- die zweite wesentliche Änderung des Drucks in Bezug auf die erste Änderung das entgegengesetzte Vorzeichen hat.

5. Hardwaresicherheitsmodul (1) nach einem der Ansprüche 1 bis 4, **dadurch gekennzeichnet, dass** es weiterhin einen Sensor umfasst, der empfindlich auf die Temperatur des Gases (15) reagiert.

6. Hardwaresicherheitsmodul (1) nach einem der Ansprüche 1 bis 5, **dadurch gekennzeichnet, dass** das Modul umfasst:
- ein erstes Teil (100), welches das Gehäuse (10), den Wandler (20, 22) und den Speicher (80) umfasst, und
- ein zweites Teil (200),
wobei eines dieser Teile in das andere dieser Teile einsteckbar ist.

7. Endgerät zur elektronischen Bezahlung mit einem Sicherheitsmodul (1) nach einem der Ansprüche 1 bis 6.

8. Verfahren zur Inbetriebnahme eines Hardwaresicherheitsmoduls (1) nach einem der Ansprüche 1 bis 7 umfassend die folgenden Schritte:
- Liefern des Hardwaresicherheitsmoduls (1);
- Einstellen der Eigenschaft des Gases (15) in dem Gehäuse;
- Laden des Geheimnisses in den Speicher (80) des Hardwaresicherheitsmoduls beim Empfangen eines ersten Signals, das einer ersten wesentlichen Änderung dieser Eigenschaft des Gases (15) entspricht;
- Einwirken auf dieses Geheimnis beim Empfangen eines zweiten Signals, das einer zweiten wesentlichen Änderung dieser Eigenschaft des Gases (15) entspricht.

9. Verfahren zur Inbetriebnahme einer Charge Hardwaresicherheitsmodule (1) mit den folgenden Schritten:
- Lieferung einer Charge Hardwaresicherheitsmodule (1) nach Anspruch 1 bis 7 und
- zufälliges Verändern der Eigenschaft eines Gases (15) in den Gehäusen der Module der Charge in einem gegebenen Intervall;
- Laden von Geheimnissen in die Speicher (80) der Charge beim Empfangen eines ersten Signals, das einer ersten wesentlichen Änderung dieser Eigenschaft des Gases (15) entspricht;
- Einwirken auf die Geheimnisse beim Empfangen eines zweiten Signals, das einer zweiten wesentlichen Änderung dieser Eigenschaft des Gases (15) entspricht.
